(19) Europäisches Patentamt
European Patent Office
Office européen des brevets

(11) EP 4 624 999 A1

(12) EUROPEAN PATENT APPLICATION

(43) Date of publication:
**01.10.2025 Bulletin 2025/40**

(21) Application number: **25162669.3**

(22) Date of filing: **10.03.2025**

(51) International Patent Classification (IPC):
***G01V 1/28*** *(2006.01)* ***G01V 1/36*** *(2006.01)*

(52) Cooperative Patent Classification (CPC):
**G01V 1/364; G01V 1/282;** G01V 2210/56

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.03.2024 US 202463562786 P**

(71) Applicants:
- **Services Pétroliers Schlumberger**
**75007 Paris (FR)**
Designated Contracting States:
**FR**
- **Geoquest Systems B.V.**
**2514 JG The Hague (NL)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
- **XAVIER DE MELO, Frederico**
**Houston, TX 77042 (US)**
- **WU, Zhiming**
**Houston, TX 77077 (US)**

(74) Representative: **Schlumberger Intellectual Property Department**
**Parkstraat 83**
**2514 JG Den Haag (NL)**

# (54) METHODS AND COMPUTING SYSTEMS FOR INTERNAL MULTIPLE REMOVAL FROM SEISMIC DATA

(57) A method implements internal multiple removal from seismic data. The method involves transforming seismic data, including a set of internal multiples, from an acquisition domain to a pseudo depth domain to generate pseudo depth data. The method further involves aggregating the pseudo depth data to generate aggregated data. The method further involves inverse transforming the aggregated data from the pseudo depth domain to the acquisition domain to generate two dimensional prediction data. The method further involves aggregating the two dimensional prediction data to generate three dimensional prediction data representing a set of internal multiple predictions corresponding to the set of internal multiples.



Processed by Luminess, 75001 PARIS (FR)

## Description

CROSS REFERENCE TO RELATED APPLICATIONS

This application claims the benefit of U.S. Provisional Application No. 63/562,786, filed March 8, 2024, which is incorporated by reference herein.

BACKGROUND

Internal multiple removal remains a major challenge for both onshore and offshore seismic data acquisition and analysis. The presence of internal multiples within seismic data may lead to artifacts in the migration, resulting in incorrect interpretation of the target and ambiguous reservoir attribute estimation. The complexity of the multiple generator mechanisms drives an understanding and effectiveness of modeling and removal of the coherent noise, especially around methods that rely on prior interpretation of the data as input. The inverse scattering series (ISS) internal multiple prediction method is one of the methods that can predict each of the internal multiples at once within seismic data without estimation about subsurface features. A challenge is that the computational cost of the ISS for a three dimensional (3D) seismic experiment is prohibitive outside of small scales and constrained examples.

SUMMARY

In general, in one or more aspects, the disclosure relates to a method implementing internal multiple removal from seismic data. The method involves transforming seismic data, including a set of internal multiples, from an acquisition domain to a pseudo depth domain to generate pseudo depth data. The method further involves aggregating the pseudo depth data to generate aggregated data. The method further involves inverse transforming the aggregated data from the pseudo depth domain to the acquisition domain to generate two dimensional prediction data. The method further involves aggregating the two dimensional prediction data to generate three dimensional prediction data representing a set of internal multiple predictions corresponding to the set of internal multiples.

In general, in one or more aspects, the disclosure relates to a system that includes at least one processor and an application that executes on the at least one processor. Executing the application performs transforming seismic data, including a set of internal multiples, from an acquisition domain to a pseudo depth domain to generate pseudo depth data. Executing the application further performs aggregating the pseudo depth data to generate aggregated data. Executing the application further performs inverse transforming the aggregated data from the pseudo depth domain to the acquisition domain to generate two dimensional prediction data. Executing the application further performs aggregating the two dimensional prediction data to generate three dimensional prediction data representing a set of internal multiple predictions corresponding to the set of internal multiples.

In general, in one or more aspects, the disclosure relates to a non-transitory computer readable medium including instructions executable by at least one processor. Executing the instructions performs transforming seismic data, including a set of internal multiples, from an acquisition domain to a pseudo depth domain to generate pseudo depth data. Executing the instructions further performs aggregating the pseudo depth data to generate aggregated data. Executing the instructions further performs inverse transforming the aggregated data from the pseudo depth domain to the acquisition domain to generate two dimensional prediction data. Executing the instructions further performs aggregating the two dimensional prediction data to generate three dimensional prediction data representing a set of internal multiple predictions corresponding to the set of internal multiples.

Other aspects of one or more embodiments may be apparent from the following description and the appended claims.

BRIEF DESCRIPTION OF DRAWINGS

FIG. 1 shows a diagram in accordance with the disclosure.
FIG. 2 shows a method in accordance with the disclosure.
FIG. 3, FIG. 4, and FIG. 5 show examples in accordance with the disclosure.
FIG. 6.1 and FIG. 6.2 show computing systems in accordance with the disclosure.

Similar elements in the various figures may be denoted by similar names and reference numerals. The features and elements described in one figure may extend to similarly named features and elements in different figures.

DETAILED DESCRIPTION

Systems and methods of the disclosure implement internal multiple removal from seismic data without the processing cost incurred for performing an inverse scattering series three dimensionally on the area of interest. To address the processing costs, a two-step prediction approach is performed to perform a multi-dimensional inverse scattering series internal multiple prediction framework. The steps include generating a collection of two dimensional forward predictions followed by an orthogonal multiple contribution gather (mcg) forming and stacking process designed to partially capture the crossline contribution of the internal multiple contamination.

Turning to FIG. 1, the system (100) includes the multiple prediction application (102) that may remove the internal multiples (108) from the seismic data (105). The system (100) may be part of a computing system, such as those described in the other figures, e.g., FIG. 6.1, and FIG. 6.2.

The multiple prediction application (102) may be a software component of one of the geosciences analysis modules (102) of FIG. 1. The multiple prediction application (102) processes the seismic data (105) to generate the three dimensional prediction data (125), which may be used to remove the internal multiples (108) from the seismic data (105) and form the modified seismic data (130).

The seismic data (105) may include seismic traces captured with equipment utilized to capture seismic surveys by generating and recording subsurface data. Land-based seismic surveys may use vibrators or explosives as seismic sources, with geophones detecting ground motion. Marine seismic surveys may use air guns to create sound waves, captured by hydrophones. Seismographs may be used for digital data recording and precise global positioning system (GPS) data for positioning. Additional equipment includes cables, drilling rigs, and computers for data processing. The specific equipment used depends on the survey's environment and objectives.

The seismic data (105) may be a collection of seismic traces (one dimensional time series) referenced to a set of spatial coordinates describing the source (shot) and sensor (receiver or geophone) locations. The seismic data (105) may be in an acquisition domain. In the examples of the later figures, the seismic data (105) may correspond to the term *Data* ($\omega$). The seismic data (105) includes the internal multiples (108).

The acquisition domain for the seismic data (105) may describe the spatial and temporal coordinates at which the seismic data (105) is recorded. The acquisition domain may encompass the geometry of the source and receiver locations on the Earth's surface (or within a borehole), including the spacing and arrangement of the source and receiver locations. The acquisition domain may also include the recording time window, defining the duration of data acquisition after each source activation. Characteristics of the acquisition domain, such as survey type (e.g., land, marine, ocean bottom node), source/receiver offsets, and fold coverage, may directly influence the quality, resolution, and interpretability of the resulting seismic image.

The internal multiples (108) are portions of the seismic data (105) that represent reflections originating and remaining within the subsurface. The reflections bounce off multiple impedance contrasts between geological layers. Internal multiples contrast with surface-related multiples, which involve at least one reflection at the surface of the Earth. Internal multiples may propagate through complex ray paths, reflecting off a series of subsurface interfaces. Internal multiples are characterized by later arrival times and potentially complex waveforms, often overlapping primary reflections. A primary reflection is a seismic wave reflection from a single interface between two geological layers.

The pseudo depth data (110), represent a transformed version of the seismic data (105) via constant velocity migration, such as a Stolt migration. The pseudo depth representation, *i.e.,* representation in the pseudo depth domain, partially focusing and positioning recorded events to facilitate the inverse scattering series computations by providing a more stable and computationally efficient framework for scattering operator inversion, particularly for handling internal multiples. The pseudo-depth migration is performed in an inverse scattering series framework to group the events recorded in the seismic for the forward prediction operation. The pseudo depth domain is not a true depth, but rather a mathematical construct used for the inverse scattering series process. Pseudo depth refers to a depth-like parameter that pay be proportional to depth and emerges during the iterative process of reconstructing subsurface properties from seismic data. While not a true, geologically accurate depth, the pseudo-depth is a computational construct used to organize and order the contributions of multiple scattering events. In the examples of the later figures, the pseudo depth data (110) may correspond to the *b*1 term, *i.e.,* $b_1$ ($k_g$, $k_s$, $z$).

The transformation component (112) is a component of the multiple prediction application (102) that converts the seismic data (105) from the acquisition domain to the pseudo depth domain, to facilitate inverse scattering series computations. The transformation component (112) processes the input data *(i.e.,* the seismic data (105)) represented in the frequency-wavenumber space and mapped to the pseudo depth domain using a constant velocity migration operation (such as a Stolt migration) to generate the pseudo depth data (110).

The aggregated data (115) is in a frequency-wavenumber domain and is a combination of multiple sets of subdivided prediction data calculated from the pseudo depth data (110). The aggregated data (115) are the predictions of internal multiples in the pseudo depth domain. In the examples of the later figures, the aggregated data (115) may correspond to the *b*3 term.

The pseudo depth aggregation component (118) is a component of the multiple prediction application (102) that generates the aggregated data (115) from the pseudo depth data (110). The pseudo depth aggregation component (118) may operate by combining the pseudo depth data (110) *(i.e.,* the $b_1$ term) 3-times based on the possible combinations of wavenumbers ($k_1$ and $k_2$), over a set of pre-defined depth range used to represent a given subset of an internal multiple, guided by the interval of integration in equation (3), further below.

The two dimensional prediction data (120) include the predictions for the internal multiples (108) within a set of two dimensional surfaces (*e.g.,* a set of two dimensional planes). The two dimensional surfaces represented within the two dimensional prediction data (120) may correspond to the locations of the sensors used to generate the seismic data (105). In the examples of the later figures, the two dimensional prediction data (120) may correspond to the $IM_3$ term.

The inverse transformation component (122) is a component of the multiple prediction application (102) that maps seismic data from the pseudo depth domain prediction back to the original acquisition domain. The inverse transformation component (122) reverses the initial acquisition domain to the pseudo depth domain mapping and may be directly use multi-dimensional Fourier transform employed in the forward transformation performed by the transformation component (112). By converting the two dimensional prediction data (120) back to the acquisition domain, the results of the inverse scattering series computations are expressed in the original data space to facilitate direct comparison and integration with the input seismic data (105).

The three dimensional prediction data (125) include the predictions for the internal multiples (108) volume being analyzed, instead of the multiple set the two dimensional data, as in the two dimensional prediction data (120). In the examples of the later figures, the two dimensional prediction data (120) may correspond to the $IM_3$ term. The $IM_3^{3D}$ term corresponds to the three dimensional prediction data (125) generated by the spatial aggregation component (128) from the two dimensional prediction data (120).

The spatial aggregation component (128) is a component of the multiple prediction application (102) that aggregates the two dimensional data from the two dimensional prediction data (120) to form the data within the three dimensional prediction data (125). For example, after computing a pre-defined number of internal multiples in the two dimensional prediction data (120) (*i.e., $IM_3$*) using the framework, adjacent sets of two dimensional planes from the two dimensional prediction data (120) are aggregated over a spatial range (referred to as an aperture) orthogonally oriented to the acquisition direction. The grouping may be done over the midpoint coordinates from the existing two dimensional $IM_3$ models in the two dimensional prediction data (120).

The modified seismic data is (130) is a modified version of the seismic data (105). The modified seismic data (130) may be generated by combining the seismic data (105) with the three dimensional prediction data (125) to subtract the internal multiple predictions (represented in the three dimensional prediction data (125)) from the seismic data (105) and remove the internal multiples (108) from the seismic data (105).

FIG. 2 shows a flowchart of a method implementing an informed feature extraction foundation model. The method of FIG. 2 may be implemented using the system of FIG. 1.1 and FIG. 1.2, and one or more of the steps may be performed on, or received at, one or more computer processors. The system may include at least one processor and an application that, when executing on the at least one processor, performs the method. A non-transitory computer readable medium may include instructions that, when executed by one or more processors, perform the method. The outputs from various components (including models, functions, procedures, programs, processors, *etc.*) for performing the method may be generated by applying a transformation to inputs using the components to create the outputs without using mental processes or human activities.

Turning to FIG. 2, the process (200) may be used to identify targeted features in a volume using a reference image from the volume and a reference mask corresponding to the reference image. The process (200) may include multiple steps (*e.g.,* Blocks 202 through 210) that may execute on the components described in the other figures, including those of FIG. 1, FIG. 6.1, and FIG. 6.2.

Block 202 includes transforming seismic data, including a set of internal multiples, from an acquisition domain to a pseudo depth domain to generate prediction data from pseudo depth data.

By way of an example, transforming the seismic data may be performed by generating the pseudo depth data with a constant velocity migration. The seismic data includes a collection of seismic traces (1D time series) referenced to a set of spatial coordinates describing the source (shot) and sensor (receiver or geophone) locations. The seismic data is represented in the acquisition domain (*e.g.*, in the two dimensional frequency-wavenumber space) and mapped to the pseudo depth domain using a constant velocity migration operation. As an example, the transform may be accomplished using the equations below.

$$b_1(\vec{k}_g, \vec{k}_s, \omega) = 2iq_s Data(\vec{k}_g, \vec{k}_s, \omega) \qquad (1)$$

$$q_s = 2\omega / c_0 \qquad (2)$$

The pseudo depth data is represented by a constant velocity migration of the term $b_1$, which is a function of the wavenumber $k$ and the temporal frequency ω. The wavenumber $k$ represents the horizontal wavenumber and is related to the angular frequency ω and wave velocity $c_0$ and measures the phase change of the wave per unit distance where higher values correspond to shorter wavelengths. The seismic data $Data(\vec{k}_g, \vec{k}_s, \omega)$ may represent the seismic data in the frequency-wavenumber domain. The angular frequency ω relates to the frequency of the seismic wave oscillations. The terms $\vec{k}_g$ and $\vec{k}_s$ represent the horizontal wavenumber vectors at the receiver and source location relative to the measured seismic trace. The wave velocity $c_0$ is the velocity of the wave in the background medium representing the speed at which seismic waves propagate through the undisturbed subsurface. The term $-2iq_s$ introduces a complex factor where $i$ is the imaginary unit $(\sqrt{-1})$. The term $q_s$ represents the vertical wavenumber. The subscripts s and g respectively identify the source and receiver.

Block 205 includes aggregating the pseudo depth data to generate aggregated data. The aggregation of the pseudo depth data initiates the process of forming the multi-dimensional model (*i.e.,* the three dimensional model of the internal multiples represented by three dimensional prediction data). The aggregation may be performed as a series of two dimensional inverse scattering series predictions, which may use the equation below.

$$\begin{aligned} b_3(k_g, k_s, \omega) = \iint dk_1 dk_2 \\ \int_{-\infty}^{\infty} dz_1 b_1(k_g, k_1, z_1) e^{+i(q_g+q_1)z_1} \\ \int_{-\infty}^{z_1-\varepsilon} dz_2 b_1(k_1, k_2, z_2) e^{-i(q_1+q_2)z_2} \\ \int_{z_2+\varepsilon}^{\infty} dz_2 b_1(k_2, k_s, z_3) e^{+i(q_2+q_s)z_3} \end{aligned} \qquad (3)$$

The term $b_1(\vec{k}_g, \vec{k}_s, z)$ represents the pseudo depth data after a constant velocity ($c_0$) migration. The different $k$ terms identify different horizontal wavenumber vectors. The terms $\vec{k}_g$ and $\vec{k}_s$ represent the horizontal wavenumber vectors at receiver and source sides, respectively. The different z terms identify different groups of waves. The term ω is temporal frequency. The horizontal wavenumbers and vertical wavenumbers are related by the expression $\left|\vec{k}_i\right|^2 + q_i^2 = \frac{\omega^2}{c_0^2}$ where the values of i include $i = g, s,$ 1,2. The term $q_i$ represents the vertical wavenumber. The term ε ensures that the sub-events meet the deeper-shallower-deeper relationship and its value is usually defined as the wavelet length. With the equation for $b_3$ above, the internal multiple model is computed by combining the $b_1$ term 3-times based on the possible combinations of wavenumbers ($k_1$ and $k_2$), over a set of pre-defined depth ranges used to represent a given subset of an internal multiple, guided by the interval of integration.

With Equation (3), the first two fold integrals are over all possible different combinations of plane waves from the source and the receiver while the inner three folds of integrals are for the combinations of sub-events that contribute to a internal multiple that meet "low-high-low" criteria in pseudo depth domain reflection points. The result of this operation is attributed to the $b_3(k_g, k_s, \omega)$ term, representing in the representation of the internal multiple in the frequency-wavenumber domain.

Aggregating the pseudo depth data may further include combining the pseudo depth data using combinations of wavenumbers. as indicated by the sign of the imaginary unit for the complex exponent in the equation for $b_3$ above, certain waves may be added (*e.g.*, the waves for $z_1$ and $z_3$ having an exponent of $+i$) with other waves being subtracted (*e.g.*, the wave for $z_2$ having an exponent of $-i$).

Block 208 includes inversely transforming the aggregated data from the frequency-wavenumber domain to the acquisition domain to generate two dimensional prediction data. The inverse transform may be performed using the equation below.

$$IM_3 = \frac{1}{2iq_s} * b_3 \qquad (4)$$

The term $IM_3$ represents the predictions of internal multiples for a two dimensional portion of the volume of interest represented by the seismic data. The term $IM_3$ is generated from the term $b_3$.

Inverse transforming the aggregated frequency-wavenumber data may further include using a correction factor with the aggregated data to generate the two dimensional prediction data. As an example, the obliquity correction factor may be the term $\frac{1}{2iq_s}$ from the equation above.

Block 210 includes aggregating the two dimensional prediction data to generate three dimensional prediction data, representing a set of internal multiple predictions, corresponding to the set of internal multiples. After computing a certain number of internal multiples $IM_3$ in two dimensional space using the framework, adjacent models are aggregated over a spatial range (referred to as an aperture) orthogonally oriented to the acquisition direction. The grouping is done over the midpoint coordinates from the existing two dimensional prediction data (*i.e.,* the $IM_3$ models). The aggregation may perform an orthogonal summation using the equation below.

$$IM_{3,ssl}^{3D}(x_m, y_m, t) = \int_{-N/2}^{N/2} IM_3(x_m, y_i, t)di \qquad (5)$$

Equation (5) operates by performing a summation of all collected/aggregated $IM_3$ models along the orthogonal direction of the original two dimension models. The direction or orientation of the two dimensional models is represented by the coordinate variable $x_m$, with $y_m$ and $y_i$ describing the output and search coordinate variables orthogonally oriented from the original $IM_3$ direction. The search and summation is limited by the term $N$, bounding the limits of integration. The $IM_3^{3D}$ term captures the information that was not considered or ignored by the $IM_3$ term when producing two dimensional models.

Aggregating the two dimensional prediction data may further include sampling the two dimensional prediction data using a cross line aperture. The cross line aperture may be orthogonal to the planes of the two dimensional predictions data.

Aggregating the two dimensional prediction data may further include referencing the two dimensional prediction data to a midpoint location. The midpoint location may correspond to a center point of the volume represented in the seismic data.

Aggregating the two dimensional prediction data may further include aggregating the two dimensional prediction data for multiple pairs of sources and receivers used to capture the seismic data, which, may include seismic traces from one or more sources and one or more receivers. The aggregation of the two dimensional prediction data to form the three dimensional prediction data may be performed for each possible pair of source and receiver.

The process (200) may further include subtracting the set of internal multiple predictions to remove the set of internal multiples from the seismic data and generate modified seismic data. The internal multiples within the scientific data may be similar to the internal multiple predictions in the three dimensional prediction data. As an example, the similarity may be within 0.1 percent to 0.001 percent. By subtracting the three dimensional prediction data from the seismic data, the internal multiples within the seismic data may be removed.

The process (200) may further include presenting one or more of the set of internal multiple predictions and modified seismic data generated by combining the seismic data with the set of internal multiple predictions from the modified seismic data. The modified seismic data may be used to generate and present a subsurface image depicting a subsurface feature. Types of subsurface features depicted in the subsurface image may include faults, horizons, salt domes, channels, anticlines, synclines, reefs, fractures, karst, unconformities, igneous intrusions, fluid reservoirs, stratigraphic traps, diapirs, *etc.*

The process (200) may further include acquiring the seismic data as a set of one dimensional seismic traces. The one dimensional segment traces may be recorded by equipment at a location of interest and stored to a repository that may be remotely accessed.

Turning to FIG. 3, the diagram (300) illustrates the relations from the equation (302) (similar to Equation (3) above). The different $z$ terms (305), (308), (310) correspond to different depths. The different $k$ terms correspond to the sources and receivers of a wave. The information for $z_1$ and $z_2$ are added (indicated by the $+i$ complex coefficient of the exponential) and the information for $z_2$ is subtracted (indicated by the $-i$ complex coefficient of the exponential).

The equation (310) is a simplified form of the equation above. The equation (310) shows that the $b_1$ term (representing the two dimensional prediction data) is a function of *Data*($\omega$), *i.e.,* the seismic data.

Turning to FIG. 4, the equation (400) is similar to equation (5) above. The equation (400) converts two dimensional prediction data to three dimensional prediction data by performing an orthogonal summation along an aperture (*e.g.*, the aperture. (430)).

The diagram (420) illustrates relationships between the sensory equipment and the seismic data. The diagram (420) may illustrate a marine acquisition system with a ship (represented by the triangle (422)) pulling nine lines of sensors. The line (425) (numbered as "1") is a dotted line that represents the location that one of the sensors was dragged through by the ship during the process of data acquisition. The midpoint (428) represents a point at the center of the volume being analyzed. The aperture (430) identifies a portion of the multiple two dimensional planes that are aggregated to generate the three dimensional prediction data.

The workflow (450) may be used to generate output models that include three dimensional prediction data representing internal multiples from the original input field data. At Block (452), seismic data is captured as input field data by a system such as that shown in the diagram (420). At Block (455), two dimensional prediction data is generated from the data by performing a two dimensional inverse scattering series transformation on the input field data. As shown in this example nine transformations may be performed, one for each of the lines (including the line (425)) shown in the diagram (420). The two dimensional prediction data forms a collection of inverse scattering series models that are two dimensional and correspond to the lines (including the line (425)) of the diagram (420).

At Block (458), the two dimensional prediction data is processed to generate three dimensional prediction data by performing orthogonal grouping to construct the three dimensional model of internal multiple predictions based on the two dimensional internal predictions generated in block (455). At Block (460), Models generated using the workflow (450) are output. The models output by the workflow (450) may include the two dimensional models of internal multiple predictions as represented by the two dimensional prediction data and may include a three dimensional model of internal multiple predictions as represented by the three dimensional prediction data.

Turning to FIG. 5, the user interface (500) may display the chart (502). The axes of the chart (502) may represent distances on a surface of a volume being analyzed. The chart (502) includes multiple lines of dots labeled "SSL 1" through "SSL 9", which may be similar to those of the diagram (420) of FIG. 4.

The chart (502) includes the two apertures (522) and (525). The aperture, (522) includes the point (532), which may be shaded red to indicate the location of a source and the aperture (525), includes the point (535), which may be shaded green to indicate the location of a receiver. The segment data collected with the system, represented by the chart (502), may be processed to generate two dimensional prediction data, from which, three dimensional prediction data is created. The three dimensional data includes internal multiples and may be subtracted from the original seismic data captured with the system to remove the internal multiples from the original seismic data. By using a set of two dimensional processes that are then aggregated into a three dimensional model, the computational cost for generating the three dimensional model is reduced as compared to generating the three dimensional model directly from the original seismic data.

Embodiments may be implemented on a special purpose computing system specifically designed to achieve the improved technological result. Turning to FIG. 6.1 and FIG. 6.2, the special purpose computing system (600) may include one or more computer processors (602), non persistent storage (604), persistent storage (606), a communication interface (612) (*e.g.*, Bluetooth interface, infrared interface, network interface, optical interface, *etc.*), and numerous other elements and functionalities that implement the features and elements of the disclosure. The computer processor(s) (602) may be an integrated circuit for processing instructions. The computer processor(s) (602) may be one or more cores or micro-cores of a processor. The computer processor(s) (602) includes one or more processors. The one or more processors may include a central processing unit (CPU), a graphics processing unit (GPU), a tensor processing unit (TPU), combinations thereof, *etc.*

The input device(s) (610) may include a touchscreen, keyboard, mouse, microphone, touchpad, electronic pen, or any other type of input device. The input device(s) (610) may receive inputs from a user that are responsive to data and messages presented by the output device(s) (608). The inputs may include text input, audio input, video input, *etc.,* which may be processed and transmitted by the computing system (600) in accordance with the disclosure. The communication interface (612) may include an integrated circuit for connecting the computing system (600) to a network (not shown) (*e.g.*, a local area network (LAN), a wide area network (WAN) such as the Internet, mobile network, or any other type of network), and/or to another device, such as another computing device.

Further, the output device(s) (608) may include a display device, a printer, external storage, or any other output device. One or more of the output device(s) (608) may be the same or different from the input device(s) (610). The input device(s) (610) and the output device(s) (608) may be locally or remotely connected to the computer processor(s) (602). Many different types of computing systems exist, and the aforementioned input device(s) (610) and output device(s) (608) may take other forms. The output device(s) (608) may display data and messages that are transmitted and received by the computing system (600). The data and messages may include text, audio, video, *etc.,* and include the data and messages described above in the other figures of the disclosure.

Software instructions in the form of computer readable program code to perform embodiments may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that, when executed by a processor(s), is configured to perform one or more embodiments, which may include transmitting, receiving, presenting, and displaying data and messages described in the other figures of the disclosure.

The computing system (600) in FIG. 6.1 may be connected to or be a part of a network. For example, as shown in FIG. 6.2, the network (620) may include multiple nodes (e.g., node X (622) and node Y (624)). Each node may correspond to a computing system, such as the computing system (600) shown in FIG. 6.1, or a group of nodes combined may correspond to the computing system (600) shown in FIG. 6.1. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (600) may be located at a remote location and connected to the other elements over a network.

The nodes (*e.g.*, node X (622) and node Y (624)) in the network (620) may be configured to provide services for a client device (626), including receiving requests and transmitting responses to the client device (626). For example, the nodes may be part of a cloud computing system. The client device (626) may be a computing system, such as the computing system (600) shown in FIG. 6.1. Further, the client device (626) may include and/or perform all or a portion of one or more embodiments of the disclosure.

The computing system (600) of FIG. 6.1 may include functionality to present raw and/or processed data, such as results of comparisons and other processing. For example, presenting data may be accomplished through various presenting methods. Specifically, data may be presented by being displayed in a user interface, transmitted to a different computing system, and stored. The user interface may include a GUI that displays information on a display device. The GUI may include various GUI widgets that organize what data is shown as well as how data is presented to a user. Furthermore, the GUI may present data directly to the user, *e.g.*, data presented as actual data values through text, or rendered by the computing device into a visual representation of the data, such as through visualizing a data model.

As used herein, the term "connected to" contemplates multiple meanings. A connection may be direct or indirect (*e.g.*, through another component or network). A connection may be wired or wireless. A connection may be temporary, permanent, or a semi permanent communication channel between two entities.

The various descriptions of the figures may be combined and may include or be included within the features described in the other figures of the application. The various elements, systems, components, and steps shown in the figures may be omitted, repeated, combined, and/or altered as shown from the figures. Accordingly, the scope of the present disclosure should not be considered limited to the specific arrangements shown in the figures.

In the application, ordinal numbers (*e.g.,* first, second, third, *etc.*) may be used as an adjective for an element *(i.e.,* any noun in the application). The use of ordinal numbers is not to imply or create any particular ordering of the elements, nor to limit any element to being a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

Further, unless expressly stated otherwise, or is an "inclusive or" and, as such includes "and." Further, items joined by an "or" may include any combination of the items with any number of each item unless expressly stated otherwise.

In the above description, numerous specific details are set forth in order to provide a more thorough understanding of the disclosure. However, it will be apparent to one of ordinary skill in the art that the technology may be practiced without these specific details. In other instances, well known features have not been described in detail to avoid unnecessarily complicating the description. Further, other embodiments not explicitly described above may be devised which do not depart from the scope of the claims as disclosed herein. Accordingly, the scope should be limited only by the attached claims.

## Claims

**1.** A method comprising:

transforming seismic data, comprising a set of internal multiples, from an acquisition domain to a pseudo depth domain to generate pseudo depth data;
aggregating the pseudo depth data to generate aggregated data;
inverse transforming the aggregated data from the pseudo depth domain to the acquisition domain to generate two dimensional prediction data; and
aggregating the two dimensional prediction data to generate three dimensional prediction data representing a set of internal multiple predictions corresponding to the set of internal multiples.

**2.** The method of claim 1, further comprising:

subtracting the set of internal multiple predictions to remove the set of internal multiples from the seismic data and generate modified seismic data.

**3.** The method of claim 1 or 2, further comprising:
presenting one or more of the set of internal multiple predictions and modified seismic data generated by combining the seismic data with the set of internal multiple predictions from the modified seismic data, wherein the modified seismic data is used to generate and present a subsurface image depicting a subsurface feature.

**4.** The method of any one of the preceding claims, further comprising:
acquiring the seismic data as a set of one dimensional seismic traces.

**5.** The method of any one of the preceding claims, wherein transforming the seismic data further comprises:
generating the pseudo depth data with a constant velocity migration.

**6.** The method of any one of the preceding claims, wherein aggregating the pseudo depth data further comprises:
combining the pseudo depth data using combinations of wavenumbers.

**7.** The method of any one of the preceding claims, wherein inverse transforming the aggregated data further comprises:
using a correction factor with the aggregated data to generate the two dimensional prediction data.

**8.** The method of any one of the preceding claims, wherein aggregating the two dimensional prediction data further comprises:
sampling the two dimensional prediction data using a cross line aperture.

**9.** The method of any one of the preceding claims, wherein aggregating the two dimensional prediction data further comprises:
referencing the two dimensional prediction data to a midpoint location.

**10.** The method of any one of the preceding claims, wherein aggregating the two dimensional prediction data further comprises:
aggregating the two dimensional prediction data for multiple pairs of sources and receivers used to capture the seismic data.

**11.** A system comprising:

at least one processor; and
an application that, when executing on the at least one processor, performs stored operations comprising performing steps of a method according to any one of the preceding claims.

**12.** A non-transitory computer readable medium comprising stored instructions executable by at least one processor to perform steps of a method according to any one of the claims 1 - 10.

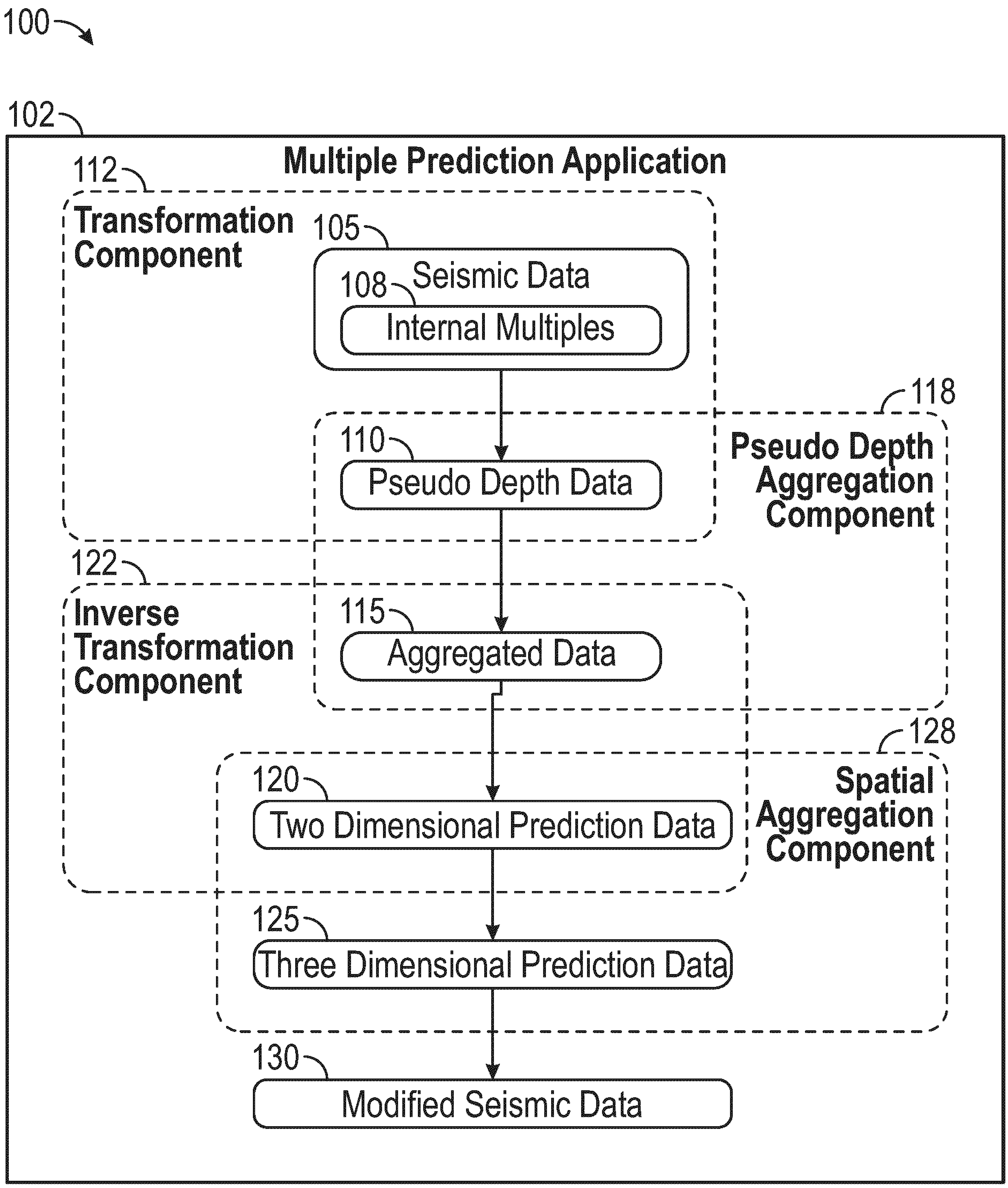
100
102
Multiple Prediction Application
112
Transformation Component
105
Seismic Data
108
Internal Multiples
118
110
Pseudo Depth Data
Pseudo Depth Aggregation Component
122
Inverse Transformation Component
115
Aggregated Data
128
120
Two Dimensional Prediction Data
Spatial Aggregation Component
125
Three Dimensional Prediction Data
130
Modified Seismic Data

FIG. 1

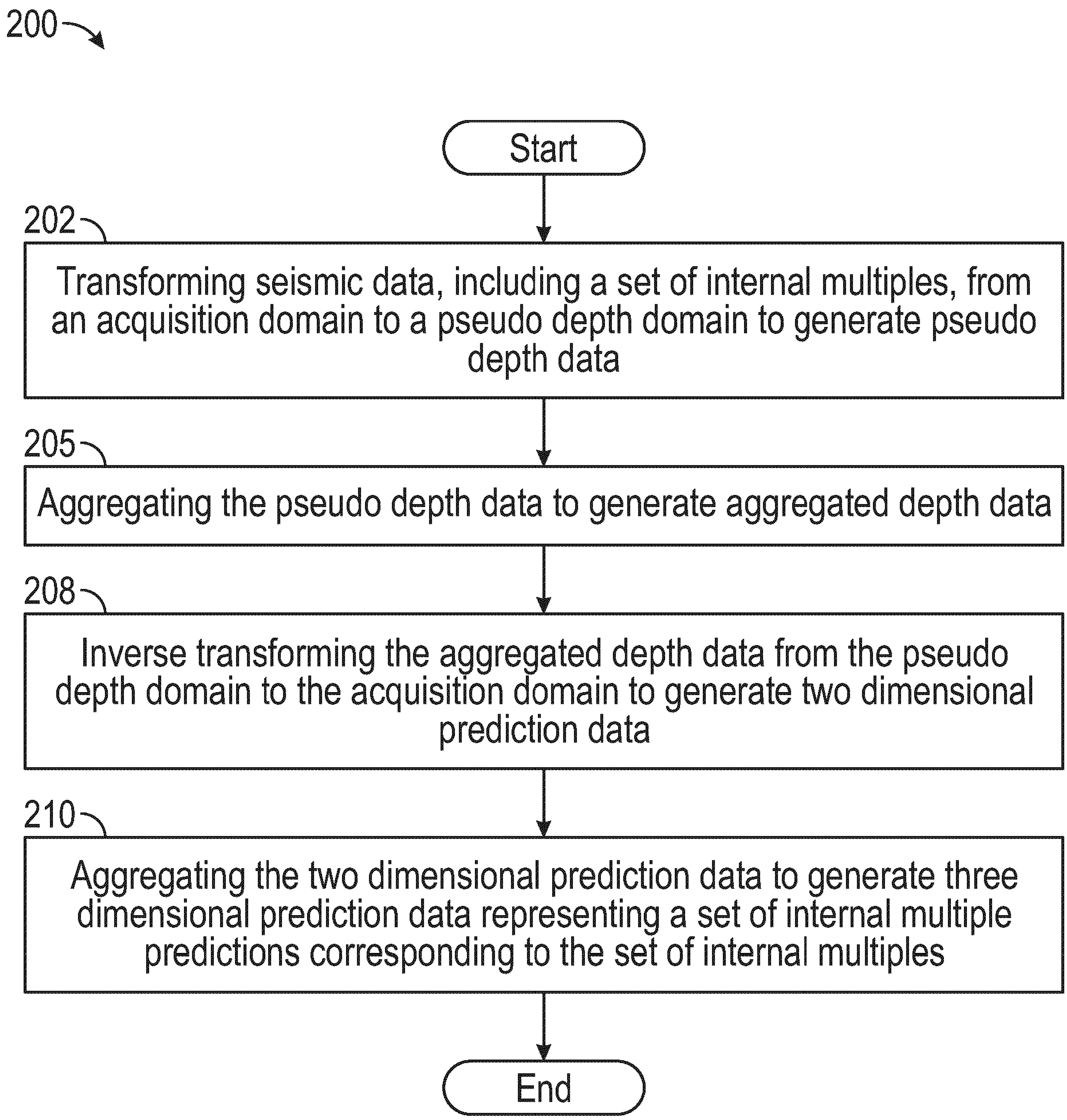
200
Start
202
Transforming seismic data, including a set of internal multiples, from an acquisition domain to a pseudo depth domain to generate pseudo depth data
205
Aggregating the pseudo depth data to generate aggregated depth data
208
Inverse transforming the aggregated depth data from the pseudo depth domain to the acquisition domain to generate two dimensional prediction data
210
Aggregating the two dimensional prediction data to generate three dimensional prediction data representing a set of internal multiple predictions corresponding to the set of internal multiples
End

FIG. 2

## 2D ISS Modeling

→ Inverse scattering series (ISS) theory is one of the few frameworks employing all samples when constructing an internal multiple model;

→ Two-dimensional prediction framework;

302

$$b_3(k_g,k_s,\omega) = \iint dk_1 dk_2$$

$$\int_{-\infty}^{\infty} dz_1 b_1(k_g, k_1, z_1)\, e^{+i(q_g+q_1)z_1} \int_{-\infty}^{z_1-\varepsilon} dz_2\, \mathbf{b_1(k_1,k_2,z_2)}\, e^{-i(q_1+q_2)z_2} \int_{z_2+\varepsilon}^{\infty} dz_2\, \mathbf{b_1(k_2,k_s,z_3)}\, e^{+i(q_2+q_s)z_3}$$

305 308 310

$$b_1(k) = -2ik(\mathrm{Data}(\omega)) \quad k = 2\omega/c_0$$

310

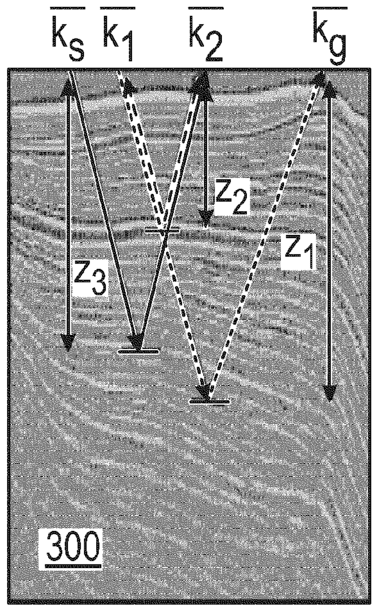


→ The schematic diagram illustrates the relation between the depth coordinates of the three integrand terms in equation 1 for a first-order internal multiple.

FIG. 3

**ISS with orthogonal summation**

→ For a given recorded trace referenced to a source;

→ Higher-dimensional model construction via orthogonal aperture summation;

400

$$IM^{3D}_{3,ssl}(x_m,y_m,t) = \int_{-N/2}^{N/2} IM_3(x_m,y_i,t)di$$

→ Generally referenced to a midpoint location;

→ Repeat operation for all pair of sources and receivers.

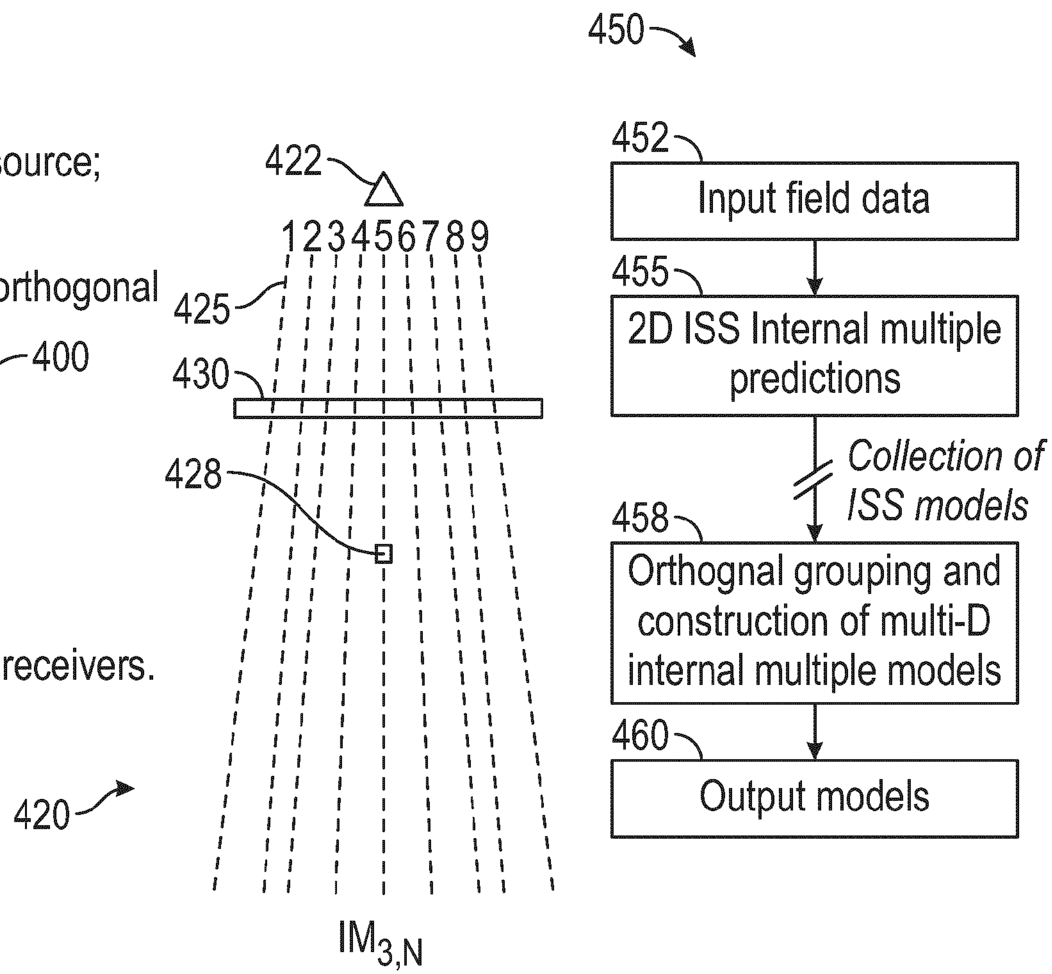


FIG. 4

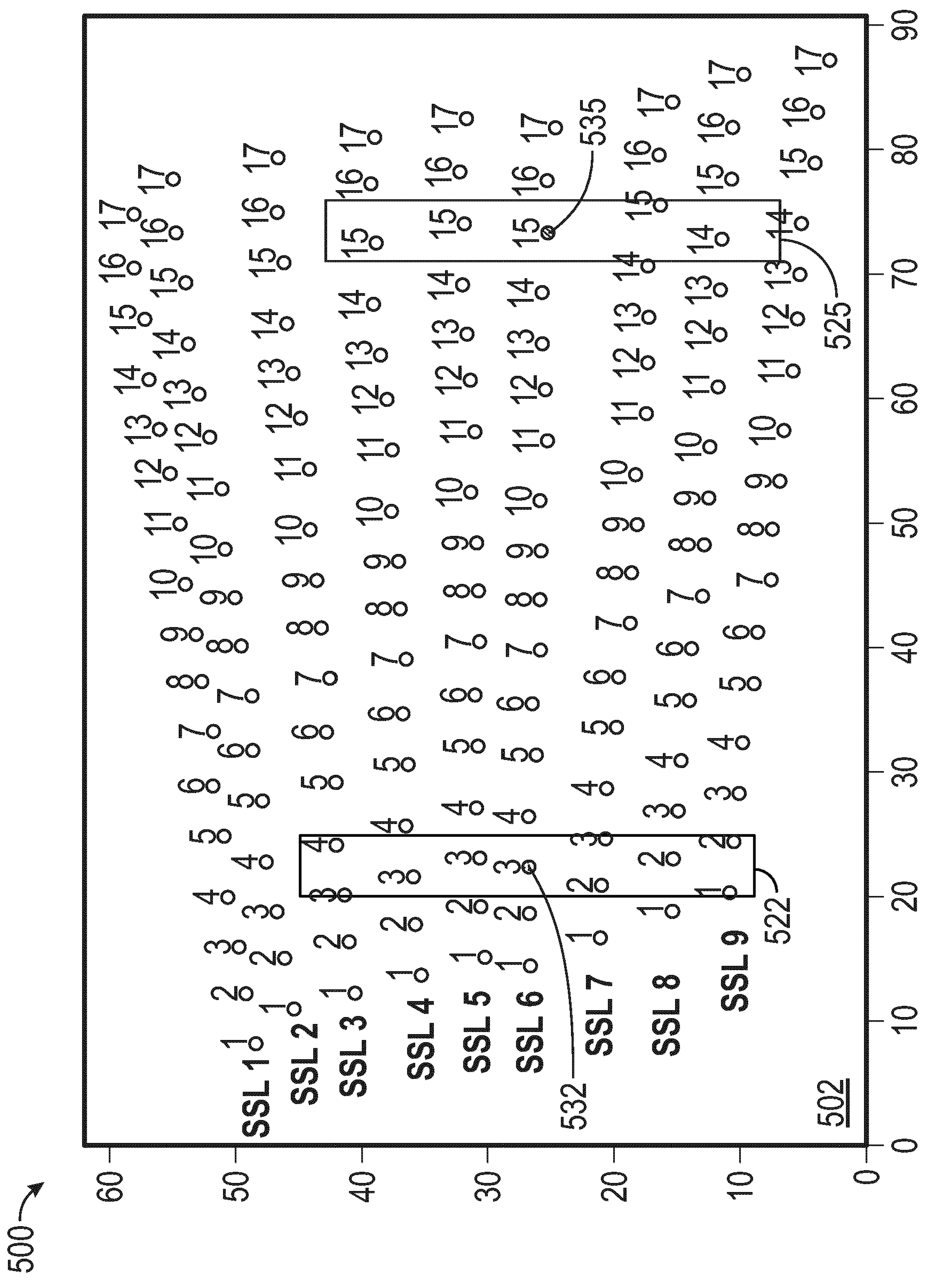
500
502
SSL 1
SSL 2
SSL 3
SSL 4
SSL 5
SSL 6
SSL 7
SSL 8
SSL 9
522
525
532
535

FIG. 5

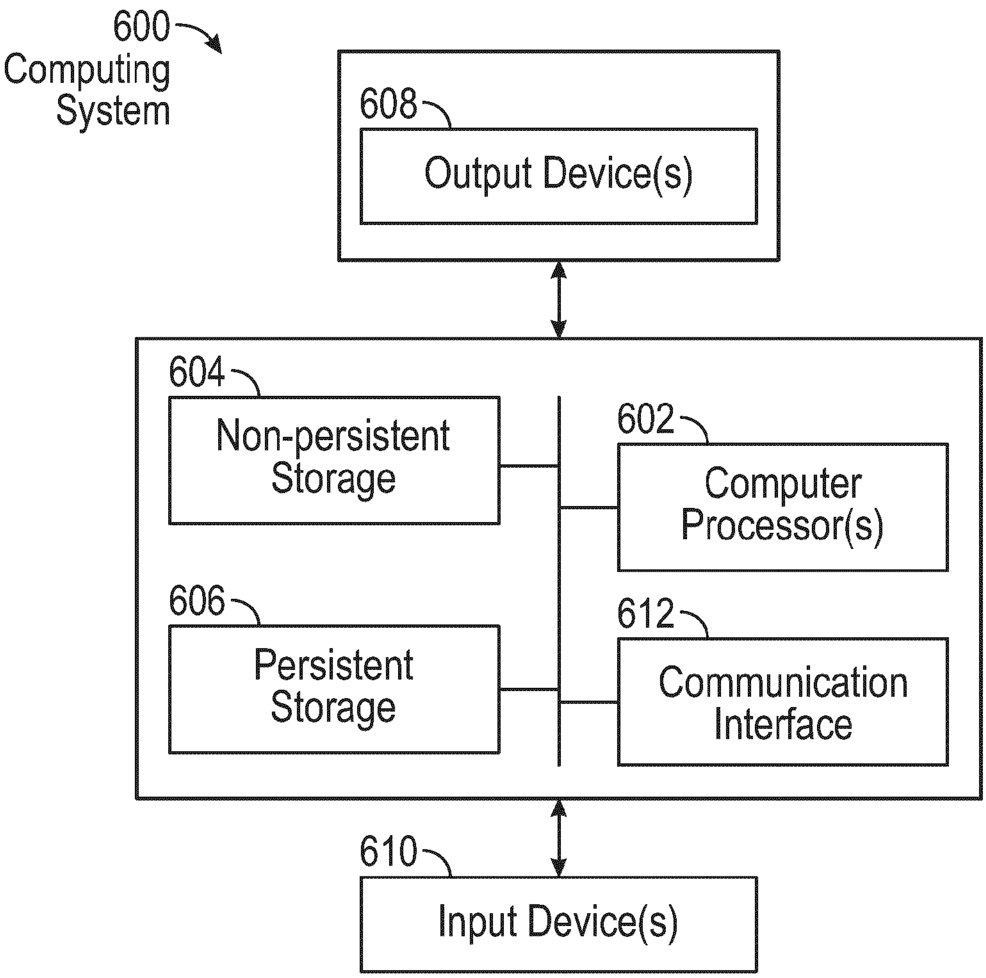
600
Computing System
608
Output Device(s)
604
Non-persistent Storage
602
Computer Processor(s)
606
Persistent Storage
612
Communication Interface
610
Input Device(s)

FIG. 6.1

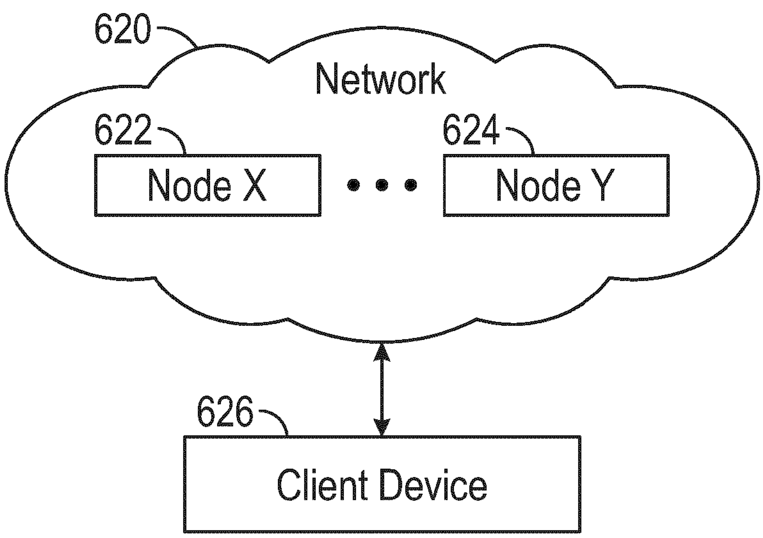
620
Network
622
Node X
624
Node Y
626
Client Device

FIG. 6.2

Europäisches Patentamt
European Patent Office
Office européen des brevets

# EUROPEAN SEARCH REPORT

Application Number
EP 25 16 2669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2013/182535 A1 (HUNG BARRY [SG]) 18 July 2013 (2013-07-18)<br>* paragraphs [0002], [0016] - [0020], [0056] - [0066]; figures 4A, 4B, 5-8, 10 *<br>----- | 1-4,8-12<br><br>5-7 | INV.<br>G01V1/28<br>G01V1/36 |
| Y | US 2017/068009 A1 (KOSTOV CLEMENT [US] ET AL) 9 March 2017 (2017-03-09)<br>* paragraph [0036] *<br>----- | 7 | |
| Y | CN 114 428 335 A (CHINESE PETROCHEMICAL INDUSTRY LTD COMPANY ET AL.)<br>3 May 2022 (2022-05-03)<br>* paragraphs [0012], [0055] - [0061] *<br>----- | 5,6 | |
| A | WANG KUNXI ET AL: "Unsupervised Learning for Seismic Internal Multiple Suppression Based on Adaptive Virtual Events",<br>IEEE TRANSACTIONS ON GEOSCIENCE AND REMOTE SENSING, IEEE, USA,<br>vol. 60, 22 April 2022 (2022-04-22), pages 1-13, XP011908166,<br>ISSN: 0196-2892, DOI: 10.1109/TGRS.2022.3169481<br>[retrieved on 2022-04-22]<br>* page 1 - page 10 *<br>----- | 1-12 | TECHNICAL FIELDS SEARCHED (IPC)<br><br>G01V |

The present search report has been drawn up for all claims

| Place of search | Date of completion of the search | Examiner |
|---|---|---|
| The Hague | 20 August 2025 | Vollmer, Thorsten |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 16 2669

This annex lists the patent family members relating to the patent documents cited in the above-mentioned European search report. The members are as contained in the European Patent Office EDP file on The European Patent Office is in no way liable for these particulars which are merely given for the purpose of information.

20-08-2025

| Patent document cited in search report | Publication date | Patent family member(s) | Publication date |
|---|---|---|---|
| US 2013182535 A1 | 18-07-2013 | CA 2801734 A1 | 12-07-2013 |
| | | FR 2985831 A1 | 19-07-2013 |
| | | GB 2499882 A | 04-09-2013 |
| | | SG 192364 A1 | 30-08-2013 |
| | | US 2013182535 A1 | 18-07-2013 |
| US 2017068009 A1 | 09-03-2017 | EP 3345020 A1 | 11-07-2018 |
| | | US 2017068009 A1 | 09-03-2017 |
| | | WO 2017039708 A1 | 09-03-2017 |
| CN 114428335 A | 03-05-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63562786